Europäisches Patentamt

European Patent Office

Office européen des brevets

(11) Numéro de publication: **0 355 072**
**A1**

# (12) DEMANDE DE BREVET EUROPEEN

(21) Numéro de dépôt: **89402263.1**

(22) Date de dépôt: **10.08.89**

(51) Int. Cl.⁵: **G 06 F 12/08**

(30) Priorité: **17.08.88 FR 8810947**

(43) Date de publication de la demande:
**21.02.90 Bulletin 90/08**

(84) Etats contractants désignés: **DE GB**

(71) Demandeur: **ETAT FRANCAIS représenté par le Ministère des Postes, des Télécommunications et de l'Espace (Centre National d'Etudes des Télécommunications) 38-40 rue du Général Leclerc F-92131 Issy-les-Moulineaux (FR)**

(72) Inventeur: **Finger, Ulrich 51 rue Ferdinand Buisson F-92140 Clamart (FR)**

**Mouret, Gérard 58 rue Voltaire F-92240 Malakoff (FR)**

(74) Mandataire: **Mongrédien, André et al c/o BREVATOME 25, rue de Ponthieu F-75008 Paris (FR)**

(54) Système d'extension de mémoire pour au moins un ensemble de traitement de données.

(57) Ce système comporte une mémoire d'extension (9) à grande capacité et à grande vitesse reliée par un bus local (10) à un ensemble (11) de gestion de cette mémoire d'extension (9), cet ensemble de gestion étant en outre relié à l'ordinateur (2) par des bus et une interface standards (6, 7) pour assurer des transferts de données enregistrées dans une mémoire interne (5), vers une mémoire d'extension (9), ou pour assurer des transferts de données enregistrées dans la mémoire interne (5) vers la mémoire d'extension (9), puis vers une mémoire à disque (8).
Application aux ordinateurs.

FIG. 1

EP 0 355 072 A1

**Description**

## SYSTEME D'EXTENSION DE MEMOIRE POUR AU MOINS UN ENSEMBLE DE TRAITEMENT DE DONNEES

La présente invention concerne un système d'extension de mémoire pour au moins un ensemble de traitement de données. Elle s'applique notamment à l'accroîssement de la capacité de la mémoire interne à grande vitesse d'un ordinateur constitué essentiellement par un processeur relié par un bus interne à cette mémoire interne de faible capacité ; elle s'applique plus particulièrement à tout ensemble de traitement dans lequel le processeur peut être relié à une unité de mémoire à disque, par une interface et un bus standards (de type SCSI - abréviation de "Small Computer System Interface" en anglais ou, en français "Système d'Interface pour Petit Ordinateur"). Ce type d'interface et de bus standards sont définis dans la norme ANSI-X3-131-1986 éditée par l'American national Standard Institute.

On sait que la mémoire interne d'un ordinateur est une mémoire à faible capacité et à grande vitesse. Cette mémoire qui est reliée au processeur par un bus interne, est périodiquement vidée sous le contrôle du processeur dans une unité à disque, grâce à une interface et un bus standards tels que mentionnés plus haut. Ce vidage de mémoire interne est rendu nécessaire par la faible capacité de cette mémoire et pour des raisons de sécurité. En effet, la mémoire interne de l'ordinateur est une mémoire volatile qui ne permet pas de conserver toutes les données et informations qui y sont enregistrées, notamment en cas de panne de l'alimentation électrique de l'ordinateur. L'unité à disque dans laquelle la mémoire interne est périodiquement vidée est une mémoire de type magnétique, de grande capacité, mais à très faible vitesse. Il en résulte que pour un ordinateur, l'utilisation d'une unité à disque est un handicap important puisqu'elle réduit les performances en vitesse de l'ensemble de traitement.

Le bus interne qui relie le processeur à sa mémoire interne est un bus très spécifique, défini par chaque constructeur. Il en résulte que lorsque l'on souhaite accroître la capacité de la mémoire interne d'un ordinateur par un système relié à ce bus interne, il est nécessaire de construire des cartes de mémoire spécifiques pour chaque ordinateur. De plus, il faut adapter le logiciel de gestion des échanges entre le processeur et la mémoire interne, à la taille de la mémoire.

Construire de nouvelles cartes mémoires adaptées à chaque bus interne est un problème qui peut être résolu technologiquement mais qui nécessite des études assez longues et des moyens financiers importants. L'adaptation du logiciel à la nouvelle taille de mémoire est souvent un problème impossible à résoudre. En effet, il arrive souvent que le processeur ne permette l'adressage que d'un nombre d'octets inférieur à la capacité de la mémoire nouvellement construite. De plus, il est souvent nécessaire d'utiliser des dispositifs dits d'accès direct à la mémoire (DMA ou Direct Memory Access) qui sont très complexes et donc très coûteux à réaliser.

La présente invention a pour but de remédier à ces inconvénients et notamment de réaliser un système d'extension de mémoire, de capacité élevée, de vitesse comparable à celle de la mémoire interne de l'ordinateur, ne nécessitant pas de logiciel spécialisé ni de matériel coûteux.

Ces buts sont atteints, notamment en reliant ce système d'extension au bus et à l'interface standards qui relient le processeur de l'ordinateur à l'unité à disque. De cette façon, le système d'extension de la mémoire interne de l'ordinateur fonctionne avec un protocole d'échange de données, entre le processeur et ce système, qui est le même que le protocole d'échange de données entre le processeur et l'unité à disque. Le système d'extension ainsi connecté à un bus et à une interface standards, s'adapte à n'importe quel ordinateur puisque ce type de bus et d'interface standards et notamment le bus et l'interface de type SCSI mentionnés plus haut, sont utilisés par la plupart des fabricants. Le processeur de l'ensemble de traitement ne voit ainsi aucune différence dans les protocoles d'échange de données entre l'unité à disque et le système d'extension de mémoire.

L'invention a pour objet un système d'extension de mémoire pour au moins un ensemble de traitement de données, cet ensemble comportant au moins un ordinateur constitué par un processeur relié par un bus interne à une mémoire interne à faible capacité et à grande vitesse, au moins une interface et un bus standards d'un type permettant de relier le processeur à au moins une unité de mémoire à disque à grande capacité et à faible vitesse, capable d'enregistrer des données contenues dans la mémoire interne, ce système étant caractérisé en ce qu'il comporte au moins une mémoire d'extension à grande capacité et à grande vitesse reliée par un bus local à un ensemble de gestion de cette mémoire d'extension, cet ensemble de gestion étant en outre relié à l'ordinateur par lesdits bus et interface standards pour assurer des transferts de données enregistrées dans la mémoire interne, vers la mémoire d'extension, ou pour assurer des transferts de données enregistrées dans la mémoire interne vers la mémoire d'extension, puis vers la mémoire à disque.

Selon une autre caractéristique, l'ensemble de gestion comporte un microprocesseur relié au processeur par lesdits bus et interface standards, ce microprocesseur étant relié à la mémoire d'extension par ledit bus local et par un circuit logique de gestion de mémoire, ce microprocesseur étant en outre relié par un autre bus local, à un ensemble de mémorisation, pour la gestion des transferts de données.

Les caractéristiques et avantages de l'invention ressortiront mieux de la description qui va suivre, donnée en référence aux dessins annexés dans lesquels :

- la figure 1 représente schématiquement un système d'extension de mémoire conforme à l'invention, pour un ensemble de traitement de données,

- les figures 2 à 5 représentent schématiquement des ensembles de traitement de données auxquels s'appliquent des systèmes d'extension de mémoire conformes à l'invention.

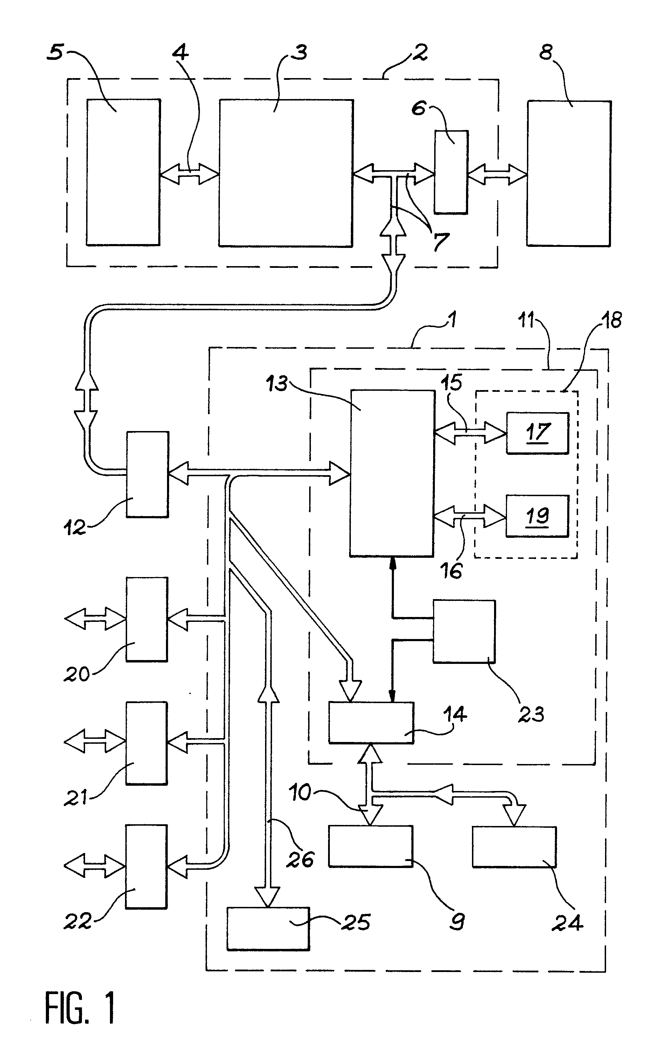

La figure 1 représente schématiquement un système 1 d'extension de mémoire, conforme à l'invention, pour au moins un ensemble de traitement de données 2. Cet ensemble comporte au moins un ordinateur constitué par un processeur 3 relié par un bus interne 4 à une mémoire interne 5 ; cette mémoire a une faible capacité, mais une grande vitesse d'enregistrement et de lecture ; elle est par exemple de type MOS.

L'ensemble de traitement comprend aussi au moins une interface 6 et un bus standards 7 d'un type permettant de relier le processeur 3 à au moins une unité de mémoire à disque 8. Cette unité de mémoire à disque 8 est, de façon connue, une unité de mémoire à grande capacité et à faible vitesse d'enregistrement et de lecture, capable d'enregistrer des données contenues dans la mémoire interne 5 du processeur 3. L'interface standard 6 et le bus 7 sont par exemple du type SCSI mentionné plus haut. Bien entendu, le bus et l'interface sont bidirectionnels. Comme indiqué plus haut, l'unité de mémoire à disque 8 permet du fait de la capacité limitée de la mémoire interne 5, de transférer des données de cette mémoire vers l'unité à disque 8, via le processeur 3 et l'interface 6 et le bus 7. Cette unité à disque permet également de sauvegarder des données contenues dans la mémoire 5, notamment en cas d'interruption de l'alimentation électrique de l'ensemble de traitement. En fait, l'interface standard 6 qui est reliée par le bus 7 au processeur 3 et à l'unité à disque 8, est l'un des "ports" de cette interface standard. Un "port" dans une interface est un bloc logique fonctionnel de cette interface, constitué de circuits logiques permettant à un ordinateur de communiquer avec des périphériques selon un protocole prédéterminé. Chaque bus standard peut ainsi être relié à plusieus "ports" de ce type.

Selon l'invention, le système d'extension de mémoire 1 qui permet d'accroître la capacité de la mémoire interne du processeur 3 de l'ordinateur de l'ensemble de traitement 2 comporte une mémoire d'extension 9 à grande capacité et à grande vitesse (de type MOS par exemple) reliée par un bus local 10 à un ensemble de gestion 11 de l'adressage de cette mémoire d'extension.

L'ensemble de gestion 11 est relié d'une part à l'ordinateur 2 de l'ensemble de traitement par le bus standard 7 et par un "port" 12 de l'interface standard, pour assurer des transferts de données enregistrées dans la mémoire interne 5, vers la mémoire d'extension 9, ou pour assurer des transferts de données enregistrées dans la mémoire interne 5 vers la mémoire d'extension 9 puis vers l'unité à disque 8. Des transferts en sens inverse peuvent bien entendu être effectués.

L'ensemble de gestion 11 comporte un microprocesseur 13 relié au processeur 3 de l'ordinateur de l'ensemble de traitement 2, par le bus standard 7 et le "port" de l'interface standard. Ce microprocesseur est aussi relié à la mémoire d'extension 9 par le bus loal 10 et par un circuit logique de gestion de mémoire 14. Des bus locaux 15, 16 relient aussi le microprocesseur à un ensemble de mémorisation 16 permettant de gérer les transferts de données entre la mémoire interne 5 et la mémoire d'extension 9, ou entre la mémoire d'extension 9 et l'unité à disque 8, ou même entre la mémoire d'extension 9 et la mémoire interne 5. L'ensemble de mémorisation 16 peut comporter par exemple une mémoire morte 17 contenant des microprogrammes de gestion des transferts de données et notamment des microprogrammes déterminant les protocoles de transferts pour les données échangées sur le bus et l'interface standards ; l'ensemble de mémorisation 16 comporte aussi une mémoire vive 18 organisée en pile par exemple, pour conserver des données importantes et notamment des adresses de données transférées.

D'autres "ports" d'interface standard 20, 21, 22 peuvent permettre de relier le microprocesseur 13, par l'intermédiaire d'autres bus standards, par exemple à d'autres ensembles de traitement ou d'autres unités à disque.

On a aussi représenté sur cette figure une horloge 23 de séquencement du fonctionnement du microprocesseur 13 et du circuit logique 14 de gestion de la mémoire d'extension 9. Une autre mémoire d'extension 24 peut aussi être reliée au bus local 10, de façon à accroître encore plus la capacité de la mémoire interne 5.

Enfin, le microprocesseur 13 peut être relié à un circuit de maintenance 25, par un bus local 26.

Le circuit de maintenance peut être par exemple de type V24 défini dans la norme RS232 du CCITT.

Le système qui vient d'être décrit permet bien d'atteindre les buts mentionnés plus haut et notamment le transfert de données de la mémoire interne du processeur 3 vers une mémoire d'extension 9 de plus grande capacité que cette mémoire interne mais présentant une vitesse de fonctionnement équivalente à celle de cette mémoire interne. Lorsque le système est utilisé pour transférer des données de la mémoire interne 5 vers la mémoire d'extension 9, on peut dire que l'interface standard est passive car elle ne transmet de données que de l'ensemble de traitement vers la mémoire d'extension. Au contraire, s'il y a transfert de données de la mémoire d'extension vers l'unité à disque 8 par exemple, on peut dire que l'interface est active. Le microprocesseur 13 et les microprogrammes contenus dans la mémoire morte 18 permettent de respecter, pour les transferts à grande vitesse vers la mémoire d'extension 9, les protocoles de transfert habituellement utilisés dans les transferts effectués de la mémoire interne 5 vers l'unité à disque 8.

La mémoire d'extension 9 peut avoir une capacité de 100 mégaoctets et être associée à un processeur de 32 bits.

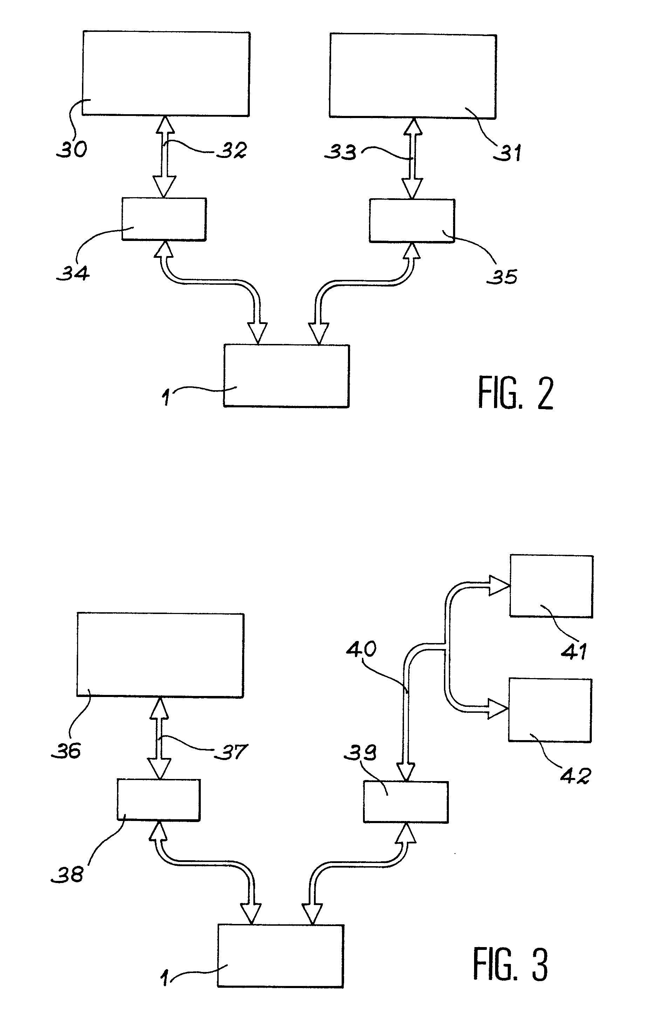

La figure 2 décrit une application d'un système 1 d'extension de mémoire, conforme à l'invention, à un ensemble de traitement constitué ici par deux ordinateurs 30, 31 comparables à l'ordinateur (processeur 3 et mémoire interne 5) de la figure 1. Chacun de ces ordinateurs est relié par un bus et un "port" d'interface standards au système d'extension de mémoire 1. Ces bus standards sont respectivement représentés en 32, 33, tandis que les "ports" d'interface standards sont respectivement représentés en 34, 35 pour les ordinateurs 30, 31. Dans un ensemble de traitement présentant cette configuration, le système d'extension de mémoire 1 permet à chacun des ordinateurs de partager une mémoire d'extension commune. On n'a pas représenté sur cette figure les unités à disque qui peuvent être éventuellement reliées aux deux ordinateurs par des bus d'interface standards et par des "ports" standards tels que décrits plus haut. Dans cette application, les deux "ports" d'interface 34, 35 sont passifs.

La figure 3 représente une autre application d'un système 1 d'extension de mémoire, conforme à l'invention, à un ensemble de traitement de données qui comporte ici un seul ordinateur 36. Dans ce type d'application, le système de l'invention permet grâce à un bus 37 et un "port" d'interface standards 38, reliés à l'ordinateur 36 et au système 1 d'extension de mémoire, de transférer des données de la mémoire interne de l'ordinateur 36 (non représenté sur cette figure) vers la mémoire d'extension du système 1. Ici, le système d'extension de mémoire comporte un autre "port" d'interface standard 39 relié au microprocesseur du système d'extension 1 (non représenté sur cette figure) ; cet autre "port" d'interface standard 39 est relié par un bus standard 40 à deux unités de mémoire à disque 41, 42. Le système de l'invention permet ici de transférer des données de la mémoire interne de l'ordinateur 36 vers la mémoire d'extension du système 1, et de transférer des données de cette mémoire d'extension vers l'une des deux unités à disque 41 ou 42. On peut considérer que cette organisation est comparable à un accélérateur de disque puisque les données à transférer vers les disques sont provisoirement enregistrées dans la mémoire à grande vitesse du système d'extension. Le "port" d'interface 38 peut être qualifié de passif, tandis que le port d'interface 39 peut être qualifié d'actif.

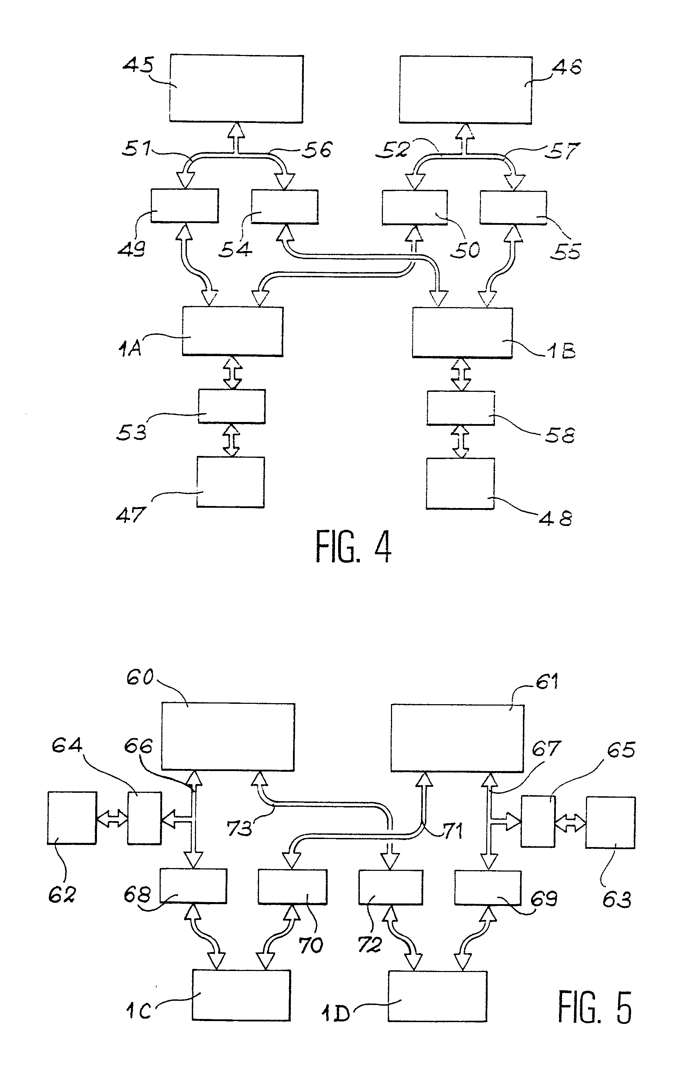

La figure 4 représente schématiquement une autre appliation dans laquelle on utilise deux systèmes 1A et 1B d'extension de mémoire, conformes à l'invention, dans un ensemble de traitement qui comporte deux ordinateurs 45, 46 reliés respectivement à deux unités de mémoire à disque 47, 48. Les deux systèmes d'extension de mémoire 1A et 1B utilisés ici permettent, comme on le verra plus loin en détail, à chacun des ordinateurs d'utiliser l'une ou l'autre des mémoires d'extension de chacun des systèmes 1A ou 1B, et d'utiliser l'une ou l'autre des unités de mémoires à disque 42, 43.

Le système d'extension 1A comporte deux "ports" d'interface standards 49, 50, reliés au microprocesseur du système d'extension 1A, et respectivement reliés par des bus d'interface standards 51, 52 aux odinateurs 45, 46. Le système d'extension 1A comporte aussi un "port" d'interface standard 53 relié par un bus standard, d'une part au microprocesseur du système d'extension 1A et, d'autre part, à l'unité de mémoire à disque 47.

De la même manière, le système d'extension de mémoire 1B comporte deux "ports" d'interface standards 54, 55 reliés au microprocesseur du système d'extension 1B et respectivement reliés par des bus d'interface standards 56, 57, aux ordinateurs 45, 46. Enfin, le système d'extension de mémoire 1B comporte aussi un autre "port" d'interface standard 58, relié au microprocesseur de ce système d'extension 1B, et relié par un bus d'interface standard, à l'unité de mémoire à disque 48.

Dans cette application, par exemple en cas de panne de l'unité de mémoire à disque 47, les données qui sont normalement transférées de la mémoire interne de l'ordinateur 45 vers l'unité de mémoire à disque 47, via la mémoire d'extension du système 1A, peuvent être transférées vers l'unité de mémoire à disque 48, via la mémoire d'extension du système d'extension 1B. Ce type d'organisation peut être qualifié d'organisation à haute disponibilité, grâce à laquelle toute panne de l'un des éléments de l'ensemble n'arrête pas le fonctionnement de cet ensemble. Les "ports" d'interface tels que 49, 50, 54, 55 peuvent être qualifiés de passifs, tandis que les "ports" d'interface tels que 53, 58 peuvent être qualifiés d'actifs.

La figure 5 représente schématiquement un autre ensemble de traitement de données dans lequel sont utilisés des systèmes d'extension de mémoire 1C, 1D conformes à l'invention. Ici, l'ensemble de traitement de données comporte deux odinateurs 60, 61 reliés respectivement à des unités de mémoire à disque 62, 63 par des "ports" d'interface standards 64, 65 et par des bus d'interface standards 66, 67.

Chaque système d'extension de mémoire comporte un "port" d'interface permettant de transférer des données de l'ordinateur correspondant vers la mémoire d'extension. C'est ainsi que le "port" d'interface standard 68 relié par le bus standard 66 à l'ordinateur 60, et relié au système d'extension 1C, permet de transférer des données de la mémoire interne de l'ordinateur 60 vers la mémoire d'extension du système 1C. De la même manière, le "port" d'interface standard 69, relié par le bus standard 67 à l'ordinateur 61, permet de transférer des données de la mémoire interne de l'ordinateur 61 vers la mémoire d'extension du système 1D.

Dans ce type d'organisation, le système d'extension 1C comporte aussi un autre "port" d'interface standard 70 relié par un bus standard 71 à l'ordinateur 61 et relié au système d'extension 1C. Ainsi, des données peuvent être transférées de la mémoire interne de l'ordinateur 61 vers la mémoire d'extension du système 1C qui est normalement affectée à l'ordinateur 60.

De la même manière, le système d'extension 1D comporte un "port" d'interface standard 72 qui est relié à ce système d'extension et qui est relié par un bus standard 73, à l'ordinateur 60. Ainsi, des données peuvent être transférées de la mémoire interne de l'ordinateur 60, vers la mémoire d'extension du système 1D. Cette mémoire est normalement affectée aux données provenant de la mémoire interne de l'ordinateur 61.

Ce type d'organisation peut aussi être qualifié d'ensemble de traitement à haute disponibilité ; en cas de panne de l'un des éléments de l'ensemble, celui-ci continue à fonctionner. Ici, tous les "ports" d'interface peuvent être qualifiés de passifs.

Le système d'extension de mémoire de l'invention qui peut permettre d'accroître la capacité d'une mémoire interne d'un ordinateur grâce à une mémoire d'extension fonctionnant à grande vitesse peut éventuellement éviter l'utilisation d'une mémoire à disque, notamment dans des ensembles de traitement dits embarqués. En effet, dans cette application, le véhicule soumet l'ensemble des traitements, et notamment l'unité de mémoire à disque, à des vibrations préjudiciables à l'enregistrement ou à la lecture des données enregistrées dans cette mémoire. Il est alors intéressant de remplacer l'unité de mémoire à disque par le système d'extension de l'invention.

**Revendications**

1. Système (1) d'extension de mémoire pour au moins un ensemble de traitement de données (2), cet ensemble comportant au moins un ordinateur constitué par un processeur (3) relié par un bus interne (4) à une mémoire interne (5) à faible capacité et à grande vitesse, au moins une interface (6) et un bus (7) standards d'un type permettant de relier le processeur à au moins une unité de mémoire à disque (8) à grande capacité et à faible vitesse, capable d'enregistrer des données contenues dans la mémoire interne (5), ce système étant caractérisé en ce qu'il comporte au moins une mémoire d'extension (9) à grande capacité et à grande vitesse reliée par un bus local (10) à un ensemble (11) de gestion de cette mémoire d'extension (9), cet ensemble de gestion étant en outre relié à l'ordinateur (2) par lesdits bus et interface standards (6, 7) pour assurer des transferts de données enregistrées dans la mémoire interne (5), vers la mémoire d'extension (9), ou pour assurer des transferts de données enregistrées dans la mémoire interne (5) vers la mémoire d'extension (9), puis vers la mémoire à disque (8).

2. Système selon la revendication 1, caractérisé en ce que l'ensemble de gestion (1) comporte un microprocesseur (13) relié au processeur (3) par lesdits bus et interface standards (6, 7), ce microprocesseur (13) étant relié à la mémoire d'extension (9) par ledit bus local (10) et par un circuit logique de gestion de mémoire (14), ce microprocesseur étant en outre relié par un autre bus local, à un ensemble de mémorisation (18), pour la gestion des transferts de données.

FIG. 1

FIG. 2

FIG. 3

FIG. 4

FIG. 5

# RAPPORT DE RECHERCHE EUROPEENNE

Office européen des brevets

Numero de la demande

EP 89 40 2263

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 071 002 (IBM) <br> * Figures 1,5; page 5, lignes 13-22; page 7, lignes 1-17; page 9, ligne 22 - page 10 * <br> --- | 1,2 | G 06 F 12/08 |
| X | EP-A-0 114 944 (IBM) <br> * Figure 1; page 9, ligne 25 - page 12, ligne 33 * <br> --- | 1,2 | |
| X | GB-A-2 052 118 (MEMOREX) <br> * Figures 2,4-6; page 3, ligne 41 - page 5, ligne 24 * <br> --- | 1,2 | |
| X | EP-A-0 080 875 (STORAGE TECHNOLOGY) <br> * Figures 1,2; page 9, ligne 24 - page 16, ligne 22 * <br> ----- | 1,2 | |

DOMAINES TECHNIQUES RECHERCHES (Int. Cl.5)

G 06 F 12/08

Le présent rapport a été établi pour toutes les revendications

| Lieu de la recherche | Date d'achèvement de la recherche | Examinateur |
|---|---|---|
| LA HAYE | 23-10-1989 | LEDRUT P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................
& : membre de la même famille, document correspondant

EPO FORM 1503 03.82 (P0402)